# EUROPEAN PATENT APPLICATION

(11) **EP 0 803 344 A1**
(43) Date of publication of application: **29.10.1997**
(21) Application number: 97201037.5
(22) Date of filing: 05.04.1997
(51) Int. Cl.: B29C 65/00, F15B 1/10

(54) **Method for manufacturing a membrane for an expansion vessel**

(30) Priority: 26.04.1996 BE 9600371
(71) Applicant: N.V. MEDIBEG S.A., naamloze vennootschap., B-8560 Wevelgem (BE)
(72) Inventor: DeBal, Dany Marie Jozef, 8560 Wevelgem (BE)
(74) Representative: Donné, Eddy

(57) **Abstract**

Method for manufacturing a flexible membrane of the type which, in use, has the shape of an oblong bag which is provided with an inlet and is destined to be suspended in a vessel (6), whereby pieces (1-2) are connected to each other, characterized in that pieces (1-2) with which the membrane is manufactured are made separately in a mould and correspond with the pieces of the bag which is longitudinally divided into pieces, which pieces (1-2), after connection with each other, extend across the transverse circumference of the bag in such a manner that the seams where the pieces are connected to each other all extend exclusively transversely to the longitudinal direction of the bag.

## Description

The invention concerns a method for manufacturing, by confection, i.e. connecting pieces to each other, a flexible membrane of the type which, in use, has the shape of an oblong bag which is provided with an inlet and which is suspended in a vessel.

Such membranes separate the liquid part from the gas part. In order to guarantee a constant pressure of the liquid part, the volume in the membrane bag continuously changes.

The membrane must therefore show a low gas permeability, resist to abrasion, mostly be resistant to anti-freeze products and have good bending properties.

To this aim the membranes are generally manufactured from natural or synthetic rubber or elastomer such as butyl-IRR or SBR rubber or EPDM.

By injection moulding small membranes can be made in one piece. Beyond a certain dimension this method can practically not be realised anymore. The membranes must therefore be made in smaller pieces by confection. The invention concerns the manufacturing of such so-called confectioned membranes.

According to the methods used until now, such membranes are manufactured from rolled rubber sheets which are cut to measure in unvulcanized condition, and subsequently attached to each other by means of a vulcanisation solution, whereupon the whole is vulcanized.

The vulcanisation solution is only applied at the spot of a connection or seam transverse to the longitudinal direction of the bag. There are, however, also connections or seams which are directed in the longitudinal direction of the bag. At these spots also a silicone ring is applied.

The silicone ring avoids that during the connection the longitudinally directed edges of the sheets are folded too sharply. Sharp folds increase the risk of defects.

Even with a silicone ring the risk of cracks or leakage remains when folding the confectioned membrane under load. The thickening at the spot of the seam also causes a weakening of the membrane, which increases this risk even more.

Moreover, after confection, the membrane must be vulcanized as a whole, which requires a lengthy post-treatment in an autoclave.

The invention relates to a method for manufacturing, by confection, a membrane for an expansion vessel which does not have these and other inconveniences and which is relatively simple, quick and cheap and which offers above all a membrane that is safe, that does not imply the danger of leakages or cracks and that therefore has a relative long life.

According to the invention this aim is realized by a method whereby the membrane is made of pieces which are connected to each other, whereby the pieces are manufactured separately in a mould and correspond with the pieces of the bag which is divided lengthwise in pieces and which thus extend after connection with each other over the transverse circumference of the bag in such a manner that all seams where the pieces are connected with each other all exclusively extend transversely to the longitudinal direction of the bag.

The pieces can be cylindrical whereby two pieces which form the extremities, have the shape of a round barrel with a bottom.

Suitably a connection flange is integrated in one of the two pieces.

If the bag is made of rubber, the parts, prior to the confection, can be vulcanized completely or with the exception of the edges where the seams are formed, while the connnection at the spot of the seams is realized by means of a vulcanisation solution and the post-vulcanisation.

Only a local heating is needed.

With a view to better show the characteristics of the invention, preferred embodiments of a method for manufacturing a membrane according to the invention are described as an example, without any restrictive character, with reference to the accompanying drawings in which:
figure 1 represents a front view of a membrane manufactured according to the invention;
figures 2 and 3 represent sections of two pieces from which the membrane of figure 1 is manufactured by confection;
figure 4 represents a section of a piece analogous to the one of figure 2, but concerning another embodiment of the invention;
figure 5 represents a section of a membrane during the confection according to the invention; figure 6 represents at an enlarged scale the detail indicated with F6 in figure 5;
figure 7 represents a detail analogous to figure 6, but concerning a variant.

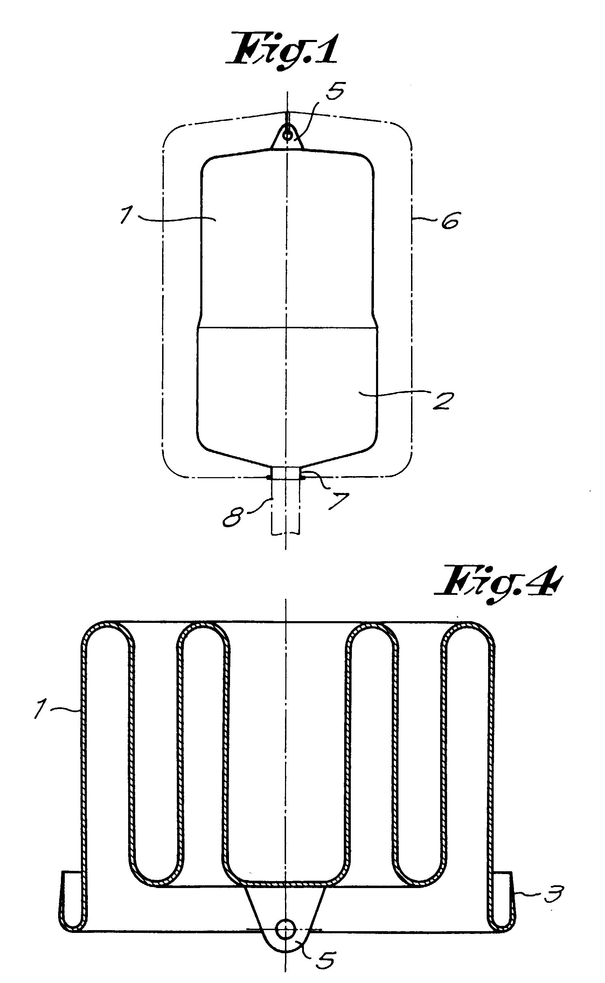

As represented in figure 1, according to the invention a flexible membrane for an expansion vessel is manufactured by confection in the shape of an oblong bag, starting from a number of pieces 1 and 2, in the given example two pieces, which form the pieces of the bag which is divided in pieces transversely to its longitudinal direction, whereby this bag is considered in unfolded condition and ready for use, such as represented in figure 1.

These pieces 1 and 2 are connected to each other with their edges 3 and 4 which, with an unfolded membrane, are directed transversely to the longitudinal direction. The membrane does not have one single seam extending lengthwise.

The two pieces 1-2 of the membrane are manufactured separately. In the example represented in the figures, the vessel is round and closed at the extremities such as represented in figure 1, and the pieces 1 and 2 form cylindrical barrels with a different diameter.

The pieces 1 and 2 can, however, also have the same diameter or another section than a round one.

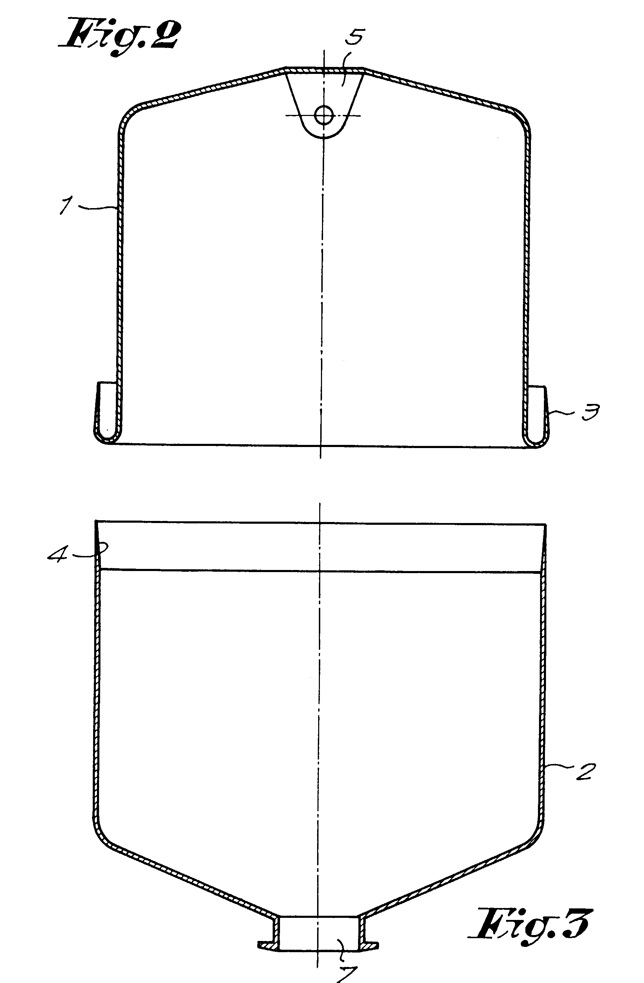

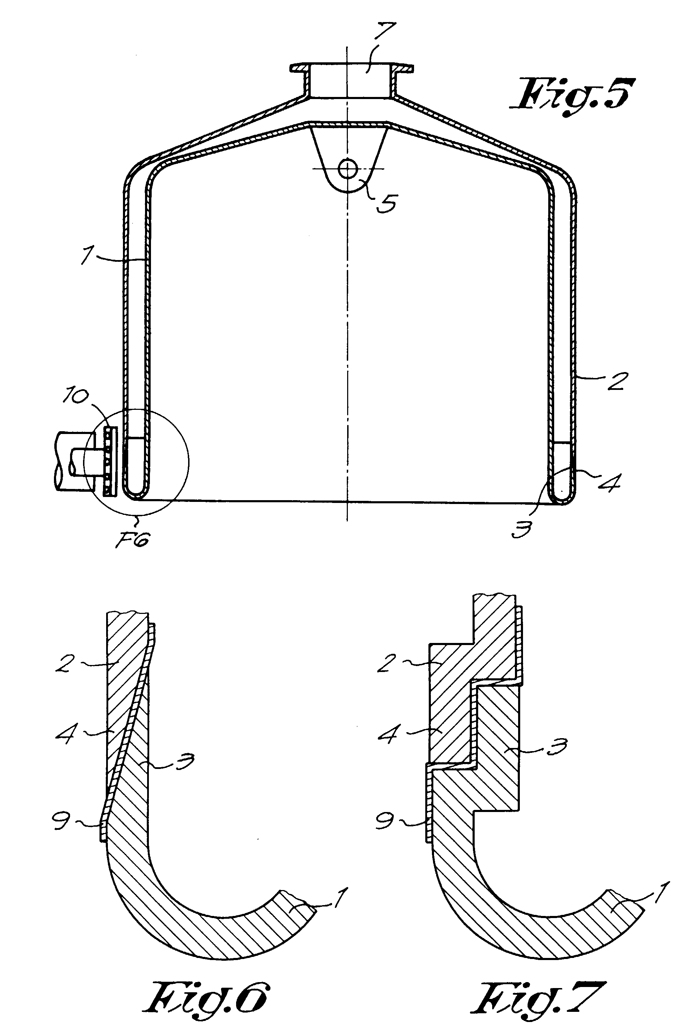

The one piece 1, which is represented in detail in figure 2, is provided with a suspension loop 5, for suspending the membrane to a hook in the vessel 6, while the other piece 2, as represented in detail in figure 3, is provided with an integrated connection flange 7 for the connection to a conduit-pipe 8, such as represented in figure 1.

Both pieces 1 and 2 are separately made in a mould, preferably by injection moulding.

In order to be able to manufacture a big piece 1 or 2 in a relatively small mould, this piece 1 or 2 can be made, according to a variant of the method, with folds such as represented in figure 4 for the piece 1. Afterwards these folds are unfolded whereby this piece 1 takes a much greater length.

The pieces 1 and 2 are manufactured from natural or synthetic rubber such as butyl rubber. The chosen material must evidently have the required properties, namely the desired permeability, flexibility and resistance to the fluids used during its application.

The pieces 1 and 2 are first vulcanized, either completely or excluding the edges 3 or 4.

These edges 3 and 4 can be beveled at the inner side of the membrane, in such a manner that when the edges 3 and 4 are brought against each other such as represented in figures 5 and 6, they have a greater surface of contact and almost do not form a thickening of the wall of the membrane.

The connection of the edges 3 and 4 of the pieces 1 and 2 is realised by applying a vulcanisation solution 9 and by heating it, for instance by means of a mirror welding apparatus 10 with electric heating resistances. Such apparatus can be used because only a local heating and vulcanisation is required.

By placing the pieces 1 and 2 one inside the other such as represented in figure 5, the edges 3 and 4 to be connected can easily be approached by the welding apparatus 10 and it is even easy to apply pressure during the connection.

After this connection, the pieces 1 and 2 are pulled away from each other and the bag is formed, whereupon one extremity therof is suspended by means of the suspension loop 5 in the vessel 6 and the connection flange is applied in an opening in the vessel 6 and connected to the conduit-pipe 8.

In order to use the expansion vessel, the space between the membrane 1-2 and the vessel 6 is filled with gas under pressure while the expanding fluid, such as for instance water, runs through the connection flange 7 into the membrane.

In a variant the membrane 1-2, instead of being made of rubber, can be made of a thermoplastic elastomer, for example the elastomer known under the trade mark Santoprene. In such a variant no vulcanisation of the pieces is necessary and for connecting the edges 3 and 4 no vulcanisation solution either. It suffices to weld these edges 3 and 4 to each other.

It is also possible to manufacture the membrane from more than two pieces. A third ring-shaped piece can be manufactured which is applied between the pieces 1 and 2 and which is fixed with its edges to the edges 3 and 4 in the manner described hereabove.

The edges 3 and 4 of the pieces 1 and 2 need not necessarily be beveled such as represented in detail in figure 6. They can also be shaped stepwise such as represented in detail in figure 7. Other shapes are also possible.

The methods described hereabove allow a good connection of the pieces 1 and 2, free of leakage, without sharp bendings and with a minimum of defects.

A defective membrane can mostly be entirely or partly recycled.

The number of connections or seams is reduced with respect to confection starting from sheets. In the example described hereabove no seams are present in the longitudinal direction of the membrane.

The connection flange 7 is integrated so that no separate confection is necessary therefor.

The post-treatment is very short on account of the fact that only local heating is required to connect the edges 3 and 4.

The dimensions of the pieces of the membrane are determined by the mould in which they are manufactured and not by the cutting to measure, so that the risk of deviations in dimensions on account of erroneous cutting and a great number of connections is avoided.

The present invention is in no way limited to the embodiments described hereabove and represented in the drawings, but such method for manufacturing an elastic membrane for an expansion vessel can be made in different variants without leaving the scope of the invention.

## Claims

1. Method for manufacturing a flexible membrane of the type which, in use, has the shape of an oblong bag which is provided with an inlet and is destined to be suspended in a vessel (6), whereby pieces (1-2) are connected to each other, characterized in that pieces (1-2) with which the membrane is manufactured are made separately in a mould and correspond with the pieces of the bag which is longitudinally divided into pieces, which pieces (1-2), after connection with each other, extend across the transverse circumference of the bag in such a manner that the seams where the pieces are connected to each other all extend exclusively transversely to the longitudinal direction of the bag.

2. Method according to claim 1, characterized in that the pieces (1-2) are cylindrical whereby two pieces (1-2) form the extremities and are formed by a round barrel with a bottom.

3. Method according to any one of the claims 1 and 2, characterized in that in one of the pieces (1) a connection flange (7) is integrated.

4. Method according to any of the preceding claims, characterized in that one of the pieces (2) is provided with a suspension loop (5).

5. Method according to any of the preceding claims, characterized in that at least one of the pieces (1-2) with folds is formed in a mould.

6. Method according to any of the preceding claims, characterized in that the pieces (1-2) are formed in such a way that their edges (3-4) are beveled.

7. Method according to claim 6, characterized in that the pieces (1-2) are formed in such a way that their edges (3-4) are beveled at the inside of the membrane and that they are connected to each other by means of the slopes of these edges (3-4).

8. Method according to any of the preceding claims, characterized in that the pieces (1-2) are connected to each other by their edges (3-4), amongst others by applying heat.

9. Method according to claim 8, characterized in that the pieces (1-2) are made of rubber and, before the connection takes place, the pieces (1-2), are entirely vulcanized or with the exception of the edges (3-4) where the seams are formed, while the connection at the spot of the seams (3-4) is realised by means of a vulcanisation solution (9) and a post-vulcanisation.
